# EUROPEAN PATENT APPLICATION

(11) **EP 4 567 347 A1**
(43) Date of publication of application: **11.06.2025**
(21) Application number: 23850037.5
(22) Date of filing: 31.07.2023
(51) Int. Cl.: F25B 1/00

(54) **FREEZING DEVICE**

(30) Priority: 05.08.2022 JP 2022125722
(71) Applicant: Panasonic Intellectual Property Management Co., Ltd., Kadoma-shi, Osaka 571-0057 (JP)
(72) Inventor: SHIRAI, Eiichi, Kadoma-shi, Osaka 571-0057 (JP); HIROTA, Masanobu, Kadoma-shi, Osaka 571-0057 (JP); HIWATA, Akira, Kadoma-shi, Osaka 571-0057 (JP)
(74) Representative: Eisenführ Speiser
(86) International application number: PCT/JP2023/027928
(87) International publication number: WO 2024/029482

(57) **Abstract**

In a refrigeration apparatus (R1), an outdoor unit (10) includes a first refrigeration cycle which includes a compressor (14) and in which a first working medium circulates. An indoor unit (20) includes at least an indoor heat exchanger (22) and second piping (21) of a second refrigeration cycle which includes a refrigerant pump and in which a second working medium circulates. A relay unit (30) independent of the outdoor unit (10) and the indoor unit (20) includes at least the refrigerant pump (34) and a relay heat exchanger (32) located between the refrigeration cycles to effect heat exchange between the refrigeration cycles. At least a flammable refrigerant is used as a refrigerant component of the first working medium, and at least a fluoroolefin is used as a refrigerant component of the second working medium. In the refrigeration apparatus, despite the use of the flammable refrigerant or the fluoroolefin as a refrigerant component, each of the refrigeration cycles can operate well, and already-existing refrigerant piping can be used.

## Description

### Technical Field

The present invention relates to a refrigeration apparatus using a refrigeration cycle working medium containing a fluoroolefin and particularly relates to a refrigeration apparatus that can successfully avoid the impact of disproportionation of a fluoroolefin.

### Background Art

A refrigeration cycle working medium is usually composed of a refrigerant and a refrigerating machine oil (a lubricating oil retained in a hermetic compressor). HCFCs (hydrochlorofluorocarbons) had been used as refrigerants in the past; however, they contribute considerably to ozone depletion. Thus, in recent years, HFCs (hydrofluorocarbons) having an ozone depletion potential (ODP) of zero have been used. A typical example is difluoromethane (HFC-32 or R-32).

Although HFCs have stability when used as refrigeration cycle working media, they have a long atmospheric lifetime and therefore a high global warming potential (GWP). Thus, nowadays, the use of saturated hydrocarbons (HCs) or fluoroolefins which have a lower GWP than HFCs has been proposed.

Examples of saturated hydrocarbons (HCs) include butane (R-600), isobutane (2-methylpropane or R-600a), and propane (R-290). These HCs have an ODP of zero and a low GWP but are flammable. Thus, a refrigeration cycle using a working medium containing an HC as a refrigerant component requires measures against the flammability such as measures to fully prevent leakage of the HC in the indoor region of the refrigeration cycle.

Hydrofluoroolefins (HFOs), which are a class of fluoroolefins, are recently attracting particular attention as refrigerant components. A typical example of HFOs is 1,1,2-trifluoroethylene (HFO-1123). HFO-1123 has a low GWP, has high cooling ability, and has performance similar to that of R-32 which is currently in widespread use.

However, fluoroolefins such as HFOs are prone to chemical decomposition and have low stability; thus, they are known to easily undergo a self-polymerization reaction called a disproportionation reaction (hereinafter referred to as "disproportionation"). It is also known that the occurrence of disproportionation entails a large amount of heat release which causes a chain reaction of disproportionation, resulting in a large amount of soot. Thus, a refrigeration cycle using a fluoroolefin as a refrigerant component needs to be prepared against disproportionation.

In the field of refrigeration apparatuses, there is a demand to use previously-installed indoor refrigerant piping (already-existing refrigerant piping) without substantial change when replacing a hitherto-used working medium by another working medium having a lower GWP than the hitherto-used working medium.

A refrigeration cycle working medium may contain not only a refrigerant component but also a refrigerating machine oil used in a compressor. Thus, for example, when the refrigerant component is changed from an HCFC to an HFC having a lower GWP than the HCFC, the refrigerating machine oil used together with the HCFC (or a compound derived from the refrigerating machine oil) remains in refrigerant piping.

If the refrigerating machine oil or the like remaining in the refrigerant piping mixes into a refrigeration cycle using the HFC having replaced the HCFC, the refrigerating machine oil or the like can affect the operation of a device such as a compressor or an expansion mechanism included in the refrigeration cycle. In such a case, the refrigerant piping needs to be entirely replaced or thoroughly cleaned, and this makes it impossible to meet the demand to use already-existing refrigerant piping without substantial change.

Various kinds of refrigeration apparatuses have been heretofore proposed to meet the above-described demand. For example, Patent Literature 1 discloses a refrigeration apparatus including: a heat source-side refrigerant circuit (heat source-side refrigeration cycle) that includes a compressor and a use-side refrigerant circuit (use-side refrigeration cycle) that does not include any compressor but includes a refrigerant pump, the two refrigerant circuits being connected by a heat exchanger.

Such a configuration, in which the use-side refrigerant circuit does not include any compressor, can prevent a refrigerating machine oil or the like from remaining in the use-side refrigerant piping. This enables the use of already-existing refrigerant piping without substantial change.

### Citation List

### Patent Literature

PTL 1: Japanese Laid-Open Patent Application Publication No. 2000-234813

### Summary of Invention

### Technical Problem

As stated above, the demand for a lowered GWP had led to a shift of refrigerant components for use in refrigeration cycles from HCFCs to HFCs and has recently prompted a shift from HFCs to HCs or fluoroolefins (such as HFOs). However, the use of HCs requires measures against flammability, and the use of fluoroolefins imposes the need to prepare against disproportionation.

The refrigeration apparatus disclosed in Patent Literature 1 is based on the premise that the refrigerant component to be used is changed from an HCFC to an HFC. Thus, Patent Literature 1 gives no consideration to measures that should be taken when the refrigerant component is changed to a flammable refrigerant (such as an HC) or a fluoroolefin.

The present invention has been made to solve the problem as described above, and an object of the present invention is to provide a refrigeration apparatus that allows a refrigeration cycle to operate well even when using a flammable refrigerant or a fluoroolefin as a refrigerant component and that enables the use of already-existing refrigerant piping.

### Solution to Problem

In order to solve the problem described above, a refrigeration apparatus according to the present disclosure includes: a first refrigeration cycle including an outdoor heat exchanger, a compressor, an expansion mechanism, and first piping by which the outdoor heat exchanger, the compressor, and the expansion mechanism are connected to allow a first working medium to circulate through the outdoor heat exchanger, the compressor, and the expansion mechanism; a second refrigeration cycle including an indoor heat exchanger, a refrigerant pump, and second piping by which the indoor heat exchanger and the refrigerant pump are connected to allow a second working medium to circulate through the indoor heat exchanger and the refrigerant pump; and a relay heat exchanger located between the first refrigeration cycle and the second refrigeration cycle to effect heat exchange between the first refrigeration cycle and the second refrigeration cycle, wherein the refrigeration apparatus includes an outdoor unit located outdoors and including the first refrigeration cycle, an indoor unit located indoors and including at least the indoor heat exchanger and the second piping of the second refrigeration cycle, and a relay unit independent of the outdoor unit and the indoor unit and including at least the relay heat exchanger and the refrigerant pump, at least a flammable refrigerant is used as a refrigerant component of the first working medium, and at least a fluoroolefin is used as a refrigerant component of the second working medium.

In the above configuration, the relay unit, which is independent of the outdoor unit including the first refrigeration cycle and the indoor unit including part of the second refrigeration cycle, is located between the outdoor unit and the indoor unit. The second refrigeration cycle includes the refrigerant pump but does not include any compressor. The refrigerant pump does not use any refrigerating machine oil, and this eliminates the possibility that a refrigerating machine oil or the like remains in the second piping of the indoor unit including part of the second refrigeration cycle. Thus, in the indoor unit, already-existing refrigerant piping can be used with almost no change.

Furthermore, the first refrigeration cycle, which includes the compressor and employs the first working medium containing a flammable refrigerant as a main component, is included in the outdoor unit. The second refrigeration cycle, which employs the second working medium containing a fluoroolefin as a main refrigerant component, is included in part in the indoor unit and in part in the relay unit. The first refrigeration cycle using the flammable refrigerant is reliably separated from the indoor unit by the presence of the relay unit. Thus, the presence of the relay unit can further reduce the impact of the use of the flammable refrigerant.

Moreover, there is no need to use any fluoroolefin in the first working medium circulating in the first refrigeration cycle including the compressor. Fluoroolefins are likely to undergo disproportionation under high-temperature and high-pressure conditions such as those in the compressor. The non-use of any fluoroolefin as a refrigerant component of the first working medium eliminates the need to take measures against disproportionation in the first refrigeration cycle.

The second working medium containing a fluoroolefin as a main component circulates in the second refrigeration cycle which does not include any compressor. The refrigerant pump does not produce high-temperature and high-pressure conditions when pumping the second working medium, and can thus be expected to have substantially no risk of causing disproportionation of the fluoroolefin. As such, the second refrigeration cycle need not be prepared against disproportionation either.

Consequently, despite the use of a flammable refrigerant or a fluoroolefin as a refrigerant component, each of the refrigeration cycles can operate well, and already-existing refrigerant piping can be used in the indoor-side refrigeration cycle.

The above and further objects, features and advantages of the present invention will be more apparent from the following detailed description of preferred embodiments with reference to the accompanying drawings.

### Advantageous Effects of Invention

The present invention can provide a refrigeration apparatus configured as described above which allows a refrigeration cycle to operate well even when using a flammable refrigerant or a fluoroolefin as a refrigerant component and which enables the use of already-existing refrigerant piping.

### Brief Description of Drawings

FIG 1 is a schematic circuit diagram showing a typical example of the configuration of a refrigeration apparatus according to Embodiment 1 of the present invention.
FIG 2 is a schematic circuit diagram showing a typical example of the configuration of a refrigeration apparatus according to Embodiment 2 of the present invention.
FIG 3 is a schematic circuit diagram showing a typical example of the configuration of a refrigeration apparatus according to Embodiment 3 of the present invention.
FIG 4 is a schematic circuit diagram showing a typical example of the configuration of a refrigeration apparatus according to Embodiment 4 of the present invention.
FIG 5 is a schematic circuit diagram showing a typical example of the configuration of a refrigeration apparatus according to Embodiment 5 of the present invention.

### Description of Embodiments

A refrigeration apparatus according to the present disclosure includes: a first refrigeration cycle including an outdoor heat exchanger, a compressor, an expansion mechanism, and first piping by which the outdoor heat exchanger, the compressor, and the expansion mechanism are connected to allow a first working medium to circulate through the outdoor heat exchanger, the compressor, and the expansion mechanism; a second refrigeration cycle including an indoor heat exchanger, a refrigerant pump, and second piping by which the indoor heat exchanger and the refrigerant pump are connected to allow a second working medium to circulate through the indoor heat exchanger and the refrigerant pump; and a relay heat exchanger located between the first refrigeration cycle and the second refrigeration cycle to effect heat exchange between the first refrigeration cycle and the second refrigeration cycle.

The refrigeration apparatus includes an outdoor unit located outdoors and including the first refrigeration cycle. The refrigeration apparatus includes an indoor unit located indoors and including at least the indoor heat exchanger and the second piping of the second refrigeration cycle. The refrigeration apparatus includes a relay unit independent of the outdoor unit and the indoor unit and including at least the relay heat exchanger and the refrigerant pump. At least a flammable refrigerant is used as a refrigerant component of the first working medium, and at least a fluoroolefin is used as a refrigerant component of the second working medium.

In the refrigeration apparatus configured as described above, the relay unit, which is independent of the outdoor unit including the first refrigeration cycle and the indoor unit including part of the second refrigeration cycle, is located between the outdoor unit and the indoor unit. The second refrigeration cycle includes the refrigerant pump but does not include any compressor. The refrigerant pump does not use any refrigerating machine oil, and this eliminates the possibility that a refrigerating machine oil or the like remains in the second piping of the indoor unit including part of the second refrigeration cycle. Thus, in the indoor unit, already-existing refrigerant piping can be used with almost no change.

Furthermore, the first refrigeration cycle, which includes the compressor and employs the first working medium containing a flammable refrigerant as a main component, is included in the outdoor unit. The second refrigeration cycle, which employs the second working medium containing a fluoroolefin as a main refrigerant component, is included in part in the indoor unit and in part in the relay unit. The first refrigeration cycle using the flammable refrigerant is reliably separated from the indoor unit by the presence of the relay unit. Thus, the presence of the relay unit can further reduce the impact of the use of the flammable refrigerant.

Moreover, there is no need to use any fluoroolefin in the first working medium circulating in the first refrigeration cycle including the compressor. Fluoroolefins are likely to undergo disproportionation under high-temperature and high-pressure conditions such as those in the compressor. The non-use of any fluoroolefin as a refrigerant component of the first working medium eliminates the need to take measures against disproportionation in the first refrigeration cycle.

The second working medium containing a fluoroolefin as a main component circulates in the second refrigeration cycle which does not include any compressor. The refrigerant pump does not produce high-temperature and high-pressure conditions when pumping the second working medium, and can thus be expected to have substantially no risk of causing disproportionation of the fluoroolefin. As such, the second refrigeration cycle need not be prepared against disproportionation either.

Consequently, despite the use of a flammable refrigerant or a fluoroolefin as a refrigerant component, each of the refrigeration cycles can operate well, and already-existing refrigerant piping can be used in the indoor-side refrigeration cycle.

Hereinafter, exemplary embodiments of the present invention will be described with reference to the drawings. The same or equivalent elements are denoted by the same reference signs throughout the drawings and will not be described repeatedly.

### (Embodiment 1)

### [Example of configuration of refrigeration apparatus]

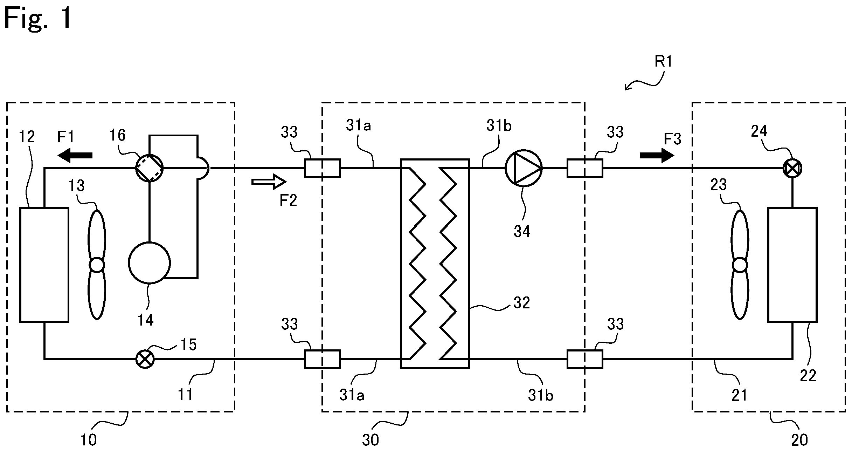

A refrigeration apparatus R1 shown in FIG 1 is a typical example of a configuration according to Embodiment 1. The refrigeration apparatus R1 is configured as an air conditioner. As shown in FIG 1, the refrigeration apparatus R1 according to Embodiment 1 includes an outdoor unit 10, an indoor unit 20, and a relay unit 30.

As shown by a dashed box in FIG 1, the outdoor unit 10 includes first piping 11, an outdoor heat exchanger 12, an outdoor blower 13, a compressor 14, an expansion valve 15, a four-way valve 16, etc. The indoor unit 20, as shown by a dashed box in FIG 1 like the outdoor unit 10, includes second piping 21, an indoor heat exchanger 22, an indoor blower 23, a refrigerant flow regulating valve 24, etc. The relay unit 30 includes first relay piping 31a, second relay piping 31b, a relay heat exchanger 32, piping connection portions 33, a refrigerant pump 34, etc.

The first piping 11 of the outdoor unit 10 and the first relay piping 31a of the relay unit 30 are connected via the piping connection portions 33. In the outdoor unit 10 and the relay unit 30, the compressor 14, one of the piping connection portions 33, the relay heat exchanger 32, another of the piping connection portions 33, the expansion valve 15, and the outdoor heat exchanger 12 are arranged in this order and serially connected in a loop by the first piping 11 and the first relay piping 31a, with the four-way valve 16 between the compressor 14 and the one piping connection portion 33 or the outdoor heat exchanger 12. The connected components and the connecting piping constitute a first refrigeration cycle.

A first working medium circulates in the first refrigeration cycle. The first working medium contains at least a flammable refrigerant as a refrigerant component. Since the first refrigeration cycle includes the compressor 14, the first working medium further contains a refrigerating machine oil used in the compressor 14. The flammable refrigerant contained in the first working medium is not limited to a particular refrigerant. Examples of flammable refrigerants that can be used in Embodiment 1 include, but are not limited to, saturated hydrocarbons such as propane and mildly flammable refrigerants such as difluoromethane (R-32). Saturated hydrocarbons having a low GWP are preferred for use as the flammable refrigerant.

The first working medium may contain a non-flammable refrigerant in addition to the flammable refrigerant or may contain a combination of different refrigerants as the flammable refrigerant. That is, the refrigerant component of the first working medium may be a single refrigerant consisting of one flammable refrigerant, may be a refrigerant mixture containing two or more flammable refrigerants, or may be a refrigerant mixture composed of one or more flammable refrigerants and one or more non-flammable refrigerants. Furthermore, the first working medium may contain other components such as additives known in the field of refrigeration cycle working media. The details of the refrigerant component will be described later.

In the first refrigeration cycle, first, the compressor 14 compresses the first working medium. The outdoor heat exchanger 12 effects heat exchange between the first working medium and outdoor air (outside air). The outdoor blower 13 delivers outdoor air toward the outdoor heat exchanger 12. The expansion valve 15 is an expansion mechanism that expands the first working medium.

The discharge outlet and the suction inlet of the compressor 14 are connected to the four-way valve 16. The four-way valve 16 switches between different positions to change the flow direction of the first working medium. A cooling operation takes place when the four-way valve 16 is in a position to connect the discharge outlet of the compressor 14 to the outdoor heat exchanger 12, while a heating operation takes place when the four-way valve 16 is in a position to connect the discharge outlet of the compressor 14 to the relay heat exchanger 32. The cooling and heating operations will be described later. In FIG 1, the direction in which the first working medium flows during the cooling operation is shown by a black block arrow F1, and the direction in which the first working medium flows during the heating operation is shown by a white block arrow F2.

As stated above, the relay unit 30 is connected to the outdoor unit 10 and to the indoor unit 20. Specifically, the second piping 21 of the indoor unit 20 and the second relay piping 31b of the relay unit 30 are connected via the piping connection portions 33.

In the indoor unit 20 and the relay unit 30, the refrigerant pump 34 (relay unit 30), one of the piping connection portions 33, the refrigerant flow regulating valve 24, the indoor heat exchanger 22 (indoor unit 20), another of the piping connection portions 33, and the relay heat exchanger 32 (relay unit 30) are arranged in this order and serially connected in a loop by the second piping 21 (indoor unit 20) and the second relay piping 31b. The connected components and the connecting piping constitute a second refrigeration cycle.

A second working medium circulates in the second refrigeration cycle. The second working medium contains at least a fluoroolefin as a refrigerant component. In Embodiment 1, the fluoroolefin contained in the second working medium is, for example, but not limited to, 1,1,2-trifluoroethylene (HFO-1123). The second working medium may be a single refrigerant consisting of HFO-1123 or may be a refrigerant mixture containing another refrigerant in addition to HFO-1123. Furthermore, the second working medium may contain other components such as additives known in the field of refrigeration cycle working media. The details of the refrigerant component will be described later.

The refrigerant pump 34 pumps the second working medium through the second relay piping 31b and the second piping 21. The indoor heat exchanger 22 effects heat exchange between the second working medium and indoor air. The indoor blower 23 delivers indoor air toward the indoor heat exchanger 22. The second refrigeration cycle does not include any component corresponding to the four-way valve 16 in the first refrigeration cycle. Thus, in the second refrigeration cycle, the second working medium flows and circulates only in one direction. In FIG 1, the flow direction of the second working medium is shown by a black block arrow F3.

The relay heat exchanger 32 is a component shared by both the first and second refrigeration cycles. The relay heat exchanger 32 effects heat exchange between the first working medium circulating in the first refrigeration cycle mainly included in the outdoor unit 10 and the second working medium circulating in the second refrigeration cycle included in part in the relay unit 30 and in part in the indoor unit 20. It can therefore be said that the first and second refrigeration cycles are thermally connected via the relay heat exchanger 32.

As described above, the refrigeration apparatus R1 according to the present disclosure is configured as a dual cycle apparatus including two cycles thermally connected via the relay heat exchanger 32 of the relay unit 30, and the relay heat exchanger 32 effects heat exchange between the first and second working media. Thus, the first and second refrigeration cycles, which are independent of each other, can be controlled together as one refrigeration apparatus R1.

In the present disclosure, the outdoor heat exchanger 12, the outdoor blower 13, the compressor 14, the expansion valve 15, the four-way valve 16, the indoor heat exchanger 22, the indoor blower 23, the piping connection portions 33, the refrigerant pump 34, and the relay heat exchanger 32 of the refrigeration apparatus R1 are not limited to particular configurations, and any configurations known in the field of refrigeration apparatuses can be suitably employed.

The outdoor heat exchanger 12 can be regarded as corresponding to a "condenser" of an ordinary refrigeration apparatus. Likewise, the indoor heat exchanger 22 can be regarded as corresponding to an "evaporator" of an ordinary refrigeration apparatus. Thus, a heat exchanger known as a condenser can be used as the outdoor heat exchanger 12, and a heat exchanger known as an evaporator can be used as the indoor heat exchanger 22. Examples of such heat exchangers include, but are not limited to, plate heat exchangers, double pipe heat exchangers, and shell-and-tube heat exchangers.

As with the outdoor heat exchanger 12 or the indoor heat exchanger 22, a known heat exchanger can be suitably used as the relay heat exchanger 32. The relay heat exchanger 32 effects heat exchange between the first and second working media unlike the outdoor heat exchanger 12 or indoor heat exchanger 22 which effects heat exchange between a corresponding one of the working media and air (outdoor air or indoor air). Thus, the type of the heat exchanger used as the relay heat exchanger 32 can be selected depending on the types of the first and second working media.

In the present disclosure, the first working medium contains a flammable refrigerant as a main refrigerant component, and the second working medium contains a fluoroolefin as a main refrigerant component. In such a case where both the first and second working media contain a known refrigerant component as a main component, a plate heat exchanger can be used as the relay heat exchanger 32.

A known hermetic refrigerant compressor can be suitably used as the compressor 14. The hermetic refrigerant compressor may be any kind of compressor such as a reciprocating, rotary, scroll, or screw compressor. The electric element of the refrigerant compressor may have the same configuration as any known motor and may be an outer rotor-type motor or an inner rotor-type motor.

The refrigerant pump 34 may have any known configuration used for pumping of refrigerants (refrigeration cycle working media). Typical examples of the pump include: reciprocating positive displacement pumps such as piston pumps, plunger pumps, and diaphragm pumps; rotary positive displacement pumps such as gear pumps and screw pumps; centrifugal pumps such as multistage pumps, vertical pumps, self-sucking pumps, canned pumps, and magnet pumps; and cascade pumps.

In the present disclosure, the refrigerant pump 34 is not limited to a particular configuration and may be configured in any way that allows the refrigerant pump 34 to successfully pump and circulate the second working medium through the second refrigeration cycle. For example, in order to significantly reduce the risk of disproportionation of the fluoroolefin contained as a refrigerant component in the second working medium, the refrigerant pump 34 may be configured to include a motor located to avoid contact with the second working medium.

Disproportionation of fluoroolefins is likely to occur under high-temperature and high-pressure conditions such as those in the compressor 14. Furthermore, the occurrence of electric discharge in the compressor 14 would notably increase the likelihood of disproportionation. The refrigerant pump 34 can pump the second working medium without producing high-temperature and high-pressure conditions and has little risk of causing disproportionation of the fluoroolefin.

However, there still remains the possibility that the occurrence of electric discharge in the motor of the refrigerant pump 34, coupled with other unpredictable factors, could give rise to disproportionation of the fluoroolefin. One approach to this problem is to place the motor of the refrigerant pump so as to avoid contact of the motor with the second working medium. When placed in this way, the motor, in which electric discharge could occur, can be kept away from the second working medium. This configuration, which takes into account the use of the fluoroolefin, can significantly reduce the risk of disproportionation of the fluoroolefin.

The expansion valve 15 used may be a thermostatic expansion valve, an electronic expansion valve, or any other expansion mechanism known in the field of refrigeration cycles. As for the four-way valve 16, the outdoor blower 13, the indoor blower 23, etc., various configurations known in the field of refrigeration apparatuses can be suitably employed.

The piping connection portions 33 are not limited to a particular configuration either, and any configuration known in the field of refrigeration apparatuses or refrigeration cycles can be suitably employed. In particular, in the present disclosure, which aims to allow already-existing refrigerant piping to be used with almost no change, the piping connection portions 33 need not be those in which the pipes are united together by welding or any other process but may be those in which the pipes are connected by means of joints (couplings for refrigerant piping). The latter configuration can enhance the efficiency in replacement of a hitherto-used refrigerant component having a high GWP (such as an HCFC or HFC) by a fluoroolefin.

The following will describe exemplary operations of the refrigeration apparatus R1 described above. A cooling operation will be described first. In the first refrigeration cycle mainly included in the outdoor unit 10, the first working medium compressed by the compressor 14 and having a high temperature and a high pressure is delivered to the outdoor heat exchanger 12 through the four-way valve 16 (the direction of the arrow F1). The outdoor heat exchanger 12 allows the first working medium to exchange heat with outdoor air (outside air) delivered by the outdoor blower 13 and thus turn into a high-pressure, middle-to-high temperature liquid, which is delivered to the expansion valve 15.

The first working medium is expanded by the expansion valve 15 and turns into a low-pressure, low-temperature gas-liquid mixture, which is delivered to the relay heat exchanger 32 through the first piping 11 of the outdoor unit 10, one of the piping connection portions 33, and the first relay piping 31a of the relay unit 30. The relay heat exchanger 32 allows the first working medium to exchange heat with the second working medium circulating in the second refrigeration cycle and thus turn into a low-pressure, middle-to-low temperature gas, which is sucked into the suction inlet of the compressor 14 through the four-way valve 16.

In the second refrigeration cycle included in part in the relay unit 30 and in part in the indoor unit 20, the second working medium is pumped by the refrigerant pump 34 to the relay heat exchanger 32 (the direction of the black block arrow F3). As stated above, the relay heat exchanger 32 effects heat exchange between the first and second working media. Thus, the second working medium is cooled by the first working medium having a low temperature and a low pressure and then delivered to the indoor heat exchanger 22 through the second relay piping 31b of the relay unit 30, one of the piping connection portions 33, and the second piping 21 of the indoor unit 20.

Since the refrigerant flow regulating valve 24 is located upstream of the indoor heat exchanger 22 in the flow direction of the second working medium, the flow rate of the second working medium flowing into the indoor heat exchanger 22 is regulated by the refrigerant flow regulating valve 24. The indoor heat exchanger 22 having received the second working medium allows the second working medium to exchange heat with indoor air delivered by the indoor blower 23. Thus, the indoor air is cooled by the second working medium and cools the indoor space. The second working medium coming out of the indoor heat exchanger 22 returns to the refrigerant pump 34 through the second piping 21, another of the piping connection portions 33, and the second relay piping 31b.

Next, a heating operation will be described. In the first refrigeration cycle, the first working medium compressed by the compressor 14 and having a high temperature and a high pressure is delivered to the relay heat exchanger 32 through the four-way valve 16, the first piping 11 of the outdoor unit 10, one of the piping connection portions 33, and the first relay piping 31a of the relay unit 30 (the direction of the arrow F2). The relay heat exchanger 32 effects heat exchange between the first working medium and the second working medium circulating in the second refrigeration cycle, thus turning the first working medium into a high-pressure, middle-to-low-temperature liquid, which is delivered to the expansion valve 15.

The first working medium is expanded by the expansion valve 15 and turns into a low-temperature, low-pressure gas-liquid mixture, which is delivered to the outdoor heat exchanger 12. The outdoor heat exchanger 12 allows the first working medium to exchange heat with outdoor air delivered by the outdoor blower 13 and thus turn into a low-pressure, middle-to-low-temperature gas, which is sucked into the suction inlet of the compressor 14.

In the second refrigeration cycle, the second working medium is pumped by the refrigerant pump 34 to the relay heat exchanger 32. As stated above, the relay heat exchanger 32 effects heat exchange between the first and second working media. Thus, the second working medium is heated by the first working medium having a high temperature and a high pressure, and the heated second working medium is delivered to the indoor heat exchanger 22 through the second relay piping 31b of the relay unit 30, one of the piping connection portions 33, and the second piping 21 of the indoor unit 20.

The indoor heat exchanger 22 allows the second working medium to exchange heat with indoor air delivered by the indoor blower 23, and thus the indoor air is heated by the second working medium and heats the indoor space. The second working medium coming out of the indoor heat exchanger 22 flows into the refrigerant flow regulating valve 24, by which the flow rate of the second working medium is regulated. After that, the second working medium returns to the refrigerant pump 34 through the second piping 21, another of the piping connection portions 33, and the second relay piping 31b.

As described above, in the refrigeration apparatus R1 according to the present embodiment, the first refrigeration cycle is included in the outdoor unit 10, at least the indoor heat exchanger 22 and the second piping 21 of the second refrigeration cycle are included in the indoor unit 20, and at least the relay heat exchanger 32 and the refrigerant pump 34 are included in the relay unit 30. At least a flammable refrigerant is used as a refrigerant component of the first working medium, and at least a fluoroolefin is used as a refrigerant component of the second working medium.

The second refrigeration cycle includes the refrigerant pump 34 but does not include any compressor 14, and the refrigerant pump 34 does not use any refrigerating machine oil. This substantially eliminates the possibility that a refrigerating machine oil, a compound derived from the refrigerating machine, or any other undesired matter remains in the second piping 21 of the indoor unit 20 including part of the second refrigeration cycle.

Generally, a refrigerating machine oil remains in already-existing refrigerant piping in a refrigeration cycle including the compressor 14 using the refrigerating machine oil. The already-existing refrigerant piping containing the remaining refrigerating machine oil cannot be used without change, and it is necessary to clean the interior of the refrigerant piping or replace the refrigerant piping entirely. In the present embodiment, since the second refrigeration cycle located on the indoor side does not include any compressor 14, the refrigerating machine oil or the like does not enter the second piping 21 located on the indoor side.

It follows that the refrigerating machine oil or the like is prevented from remaining in the second piping 21. Thus, for example, when the refrigerant component is changed from one refrigerant having a high GWP to another having a low GWP, already-existing refrigerant piping can be used with almost no change in the indoor unit 20.

Furthermore, the first refrigeration cycle, which includes the compressor 14 and employs the first working medium containing a flammable refrigerant as a main component, is included in the outdoor unit 10. In the second refrigeration cycle, there is no need to use any flammable refrigerant as a refrigerant component. The first refrigeration cycle using the flammable refrigerant is reliably separated from the indoor unit 20 by the presence of the relay unit 30. Thus, the presence of the relay unit 30 can further reduce the impact of the use of the flammable refrigerant.

Furthermore, the flammable refrigerant contained as a main refrigerant component in the first working medium may be a saturated hydrocarbon. That is, a refrigerant component having a significantly low GWP can be used in the first working medium. In addition, when the relay unit 30 is located outdoors, the whole of the first refrigeration cycle in which the first working medium circulates is located outdoors. The refrigerant component used in the second refrigeration cycle most of which is located indoors does not contain any saturated hydrocarbon. The impact of the use of a saturated hydrocarbon which is a flammable refrigerant can be further reduced by the presence of the relay unit 30.

### [Examples of compositions of first and second working media]

Hereinafter, the first and second working media used in the refrigeration apparatus R1 according to the present disclosure will be described in detail.

First of all, the first working medium used in the first refrigeration cycle contains a flammable refrigerant as a refrigerant component. A typical example of the flammable refrigerant is a saturated hydrocarbon.

Specific examples of the saturated hydrocarbon include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane.

Other examples of the flammable refrigerant include hydrofluorocarbons (HFCs) that are classified as A2 refrigerants (flammable) or A2L refrigerants (mildly flammable) according to ASHRAE 34 safety classification (these refrigerants will be referred to as "flammable HFCs" for the sake of convenience). Examples of such flammable HFCs include difluoromethane (R-32, A2L) and 1,1-difluoroethane (R-152a, A2).

One of the flammable refrigerants as mentioned above may be used alone, or two or more thereof may be used in any suitable combination. The most typical example of the saturated hydrocarbons is n-propane, and the most typical example of the flammable HFCs is R-32.

The following will describe the second working medium used in the second refrigeration cycle. The second working medium contains at least a fluoroolefin (fluoroalkene) as a refrigerant component. The fluoroolefin is not limited to a particular type, and examples of the fluoroolefin include fluoroethylenes such as 1,1,2-trifluoroethylene (HFO-1123), *trans*-1,2-difluoroethylene (HFO-1132(E)), cis-1,2-difluoroethylene (HFO-1132(Z)), 1,1-difluoroethylene (HFO-1132a), tetrafluoroethylene (FO-1114, TFE), and monofluoroethylene (HFO-1141); and fluoropropenes such as 1,2,3,3,3-pentafluoropropene (HFO-1225ye), 2,3,3,3-tetrafluoropropene (HFO-1234yf), 1,3,3,3-tetrafluoropropene (HFO-1234ze), 1,2,3,3-tetrafluoropropene (HFO-1234ye), and 3,3,3-trifluoropropene (HFO-1243zf).

One of these fluoroolefins may be used alone as a refrigerant component, or any suitable combination of two or more of the fluoroolefins may be used as a refrigerant component. Among the fluoroolefins, the fluoroethylenes are suitable for use as a refrigerant component. Among the fluoroethylenes, 1,1,2-trifluoroethylene (HFO-1123) is particularly suitable for use.

The second working medium may contain an additional refrigerant component other than fluoroolefins. The additional refrigerant component is not limited to a particular refrigerant, and typical examples of the additional refrigerant component include hydrofluorocarbons (HFCs) and natural refrigerants such as carbon dioxide (CO₂ gas), ammonia, hydrocarbons, and nitrogen.

Specific examples of the HFCs include: fluoromethanes such as difluoromethane (R-32) and trifluoromethane (R-23); fluoroethanes such as fluoroethane (R-161), 1,1-difluoroethane (R-152a), 1,1,1-trifluoroethane (R-143a), 1,1,2,2-tetrafluoroethane (R-134), 1,1,1,2-tetrafluoroethane (R-134a), pentafluoroethane (R-125), difluoroethane, and trifluoroethane; fluoropropanes such as 1,1,1,3,3-pentafluoropropane (R-245fa), 1,1,1,2,3,3-hexafluoropropane (R-236ea), 1,1,1,3,3,3-hexafluoropropane (R-236fa), and 1,1,1,2,3,3,3-heptafluoropropane (R-227ea); fluorobutanes such as 1,1,1,3,3-pentafluorobutane (R-365mfc); and fluoropentanes such as 1,1,1,2,3,4,4,5,5,5-decafluoropentane (R-4310mee) and heptafluorocyclopentane (Re-447ef).

One of the additional refrigerants as mentioned above may be used alone, or two or more thereof may be used in any suitable combination. Among the above-mentioned refrigerants, R-32 (difluoromethane) is typically suitable for use.

In the present disclosure, the second working medium contains a fluoroolefin. Fluoroolefins are known to undergo disproportionation. As previously described, the second refrigeration cycle in which the second working medium circulates does not include any compressor 14, and the refrigerant pump 34 included in the second refrigeration cycle is a pump which, unlike the compressor 14, does not bring the second working medium into a high-temperature and high-pressure state. Furthermore, the refrigerant pump 34 may be configured such that its motor, in which electric discharge could occur, does not contact the second working medium. In the present disclosure, therefore, it is expected that disproportionation of the fluoroolefin contained in the second working medium can be substantially prevented.

Nevertheless, taking into account the possibility that the fluoroolefin could undergo disproportionation due to unknown or unexpected factors, the second working medium may contain a disproportionation inhibitor that inhibits disproportionation of the fluoroolefin.

Specific examples of the disproportionation inhibitor include, but are not limited to: saturated hydrocarbons with two to five carbon atoms; haloalkanes with one to four carbon atoms other than haloalkanes all the halogen atoms of which are fluorine; and fluoroalkanes with one to three carbon atoms and a boiling point of 0°C or lower. For convenience of explanation, a saturated hydrocarbon used as a disproportionation inhibitor will be referred to as a "disproportionation-inhibiting alkane", a haloalkane used as a disproportionation inhibitor will be referred to as a "disproportionation-inhibiting haloalkane", and a fluoroalkane used as a disproportionation inhibitor will be referred to as a "disproportionation-inhibiting fluoroalkane".

As stated above, the disproportionation-inhibiting alkane used as a disproportionation inhibitor in the present disclosure may be a saturated hydrocarbon (alkane) with two to five carbon atoms, and specific examples of such a saturated hydrocarbon include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. One of these saturated hydrocarbons may be used alone, or two or more thereof may be used in any suitable combination.

All of the above-mentioned saturated hydrocarbons are gaseous at normal temperature (n-pentane and methylcyclobutane have the highest boiling point which is about 36°C, and the other hydrocarbons have a boiling point lower than 36°C), and any of the saturated hydrocarbons can be mixed well with the refrigerant component of the second working medium. Any saturated hydrocarbon with six or more carbon atoms is not preferred because such a saturated hydrocarbon is liquid at normal temperature and difficult to mix with the refrigerant component of the second working medium.

A saturated hydrocarbon with one carbon atom, namely methane, is not preferred because it has a particularly high global warming potential (GWP). Among saturated hydrocarbons with two to five carbon atoms, cyclopentane has a boiling point of 49°C and is liquid at normal temperature; however, cyclopentane may be used as a disproportionation inhibitor in the present disclosure.

The disproportionation-inhibiting haloalkane used as a disproportionation inhibitor in the present disclosure may be any haloalkane with one to four carbon atoms other than haloalkanes all the halogen atoms of which are fluorine. Specific examples of the disproportionation-inhibiting haloalkane include halomethanes (halogenated methanes) which have one carbon atom, haloethanes (halogenated ethanes) which have two carbon atoms, halopropanes (halogenated propanes) which have three carbon atoms, and halobutanes (halogenated butanes) which have four carbon atoms. Haloalkanes all the halogen substituents of which are fluorine are considered to fall within the scope of the disproportionation-inhibiting fluoroalkane as described later.

The disproportionation-inhibiting haloalkane used may be one haloalkane selected from halomethanes, haloethanes, halopropanes, and halobutanes, or two or more haloalkanes selected from these disproportionation-inhibiting haloalkanes may be used in any suitable combination. The phrase "two or more haloalkanes selected" is intended to mean not only that two or more disproportionation-inhibiting haloalkanes differing in the number of carbon atoms may be selected (for example, a combination of a halomethane and a halomethane) but also that two or more disproportionation-inhibiting haloalkanes having the same number of carbon atoms and having different halogen substituents may be selected (for example, a combination of a first haloethane and a second haloethane different from the first haloethane). In the case of using a halobutane, the halobutane may have a linear structure or may have a branched structure (a structure having the same carbon skeleton as isobutane or 2-methylpropane).

Specifically, the disproportionation-inhibiting haloalkane may have a structure represented by the following formula (1).

CₚH_{q}Xᵣ • • • (1)

In the formula (1), X is a halogen atom selected from the group consisting of fluorine (F), chlorine (Cl), bromine (Br), and iodine (I), p is an integer of 1 or 2, q is an integer of 0 or more, r is an integer of 1 or more, the sum of q and r is 2p + 2, and the halogen atoms X are the same or different when r is 2 or more.

Any haloalkane which is represented by the formula (1) but which contains only F as the halogen atom(s) X is excluded from the scope of the disproportionation-inhibiting haloalkane. This is because any disproportionation-inhibiting haloalkane which contains only F as the halogen atom(s) X corresponds to a fluoromethane with one carbon atom or a fluoroethane with two carbon atoms, both of which fall within the scope of the disproportionation-inhibiting fluoroalkane described later.

In a disproportionation-inhibiting haloalkane represented by the formula (1), the halogen atom X may be at least one of F, Cl, Br, and I as stated above and is preferably at least I. When the number of carbon atoms is 2 (p = 2) and the number of halogen atoms is 2 or more (r ≥ 2), the halogen atoms X preferably include at least F and I.

When a disproportionation-inhibiting haloalkane represented by the formula (1) contains Cl and/or Br, the disproportionation-inhibiting haloalkane tends to have a high ozone depletion potential (ODP) and could be limited in availability or handleability. Regardless of what the halogen atom(s) X is (are), some disproportionation-inhibiting haloalkanes represented by the formula (1) are compounds having a relatively high ozone depletion potential (ODP) and/or a relatively high global warming potential (GWP).

In the present disclosure, a disproportionation-inhibiting haloalkane added to the second working medium can effectively inhibit disproportionation of the fluoroolefin or retard rapid progress of disproportionation of the fluoroolefin even when the amount of the added disproportionation-inhibiting haloalkane is relatively small. In addition, even when a disproportionation-inhibiting haloalkane is used in combination with another disproportionation inhibitor such as a disproportionation-inhibiting alkane, the total amount of the disproportionation inhibitors added is sufficiently small relative to the total amount of the first working medium. Thus, the use of a disproportionation-inhibiting haloalkane does not cause any significant impact on the environment even when the disproportionation-inhibiting haloalkane has a relatively high ODP or GWP.

Specific examples of disproportionation-inhibiting haloalkanes represented by the formula (1) include, but are not limited to: halomethanes such as (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), fluorodiiodomethane (CHFI₂), difluorodiiodomethane (CF₂I₂), dibromodifluoromethane (CBr₂F₂), trifluoroiodomethane (CF₃I), and difluoroiodomethane (CHF₂I); and haloethanes such as 1,1,1-trifluoro-2-iodoethane (CF₃CH₂I), monoiodoethane (CH₃CH₂I), monobromoethane (CH₃CH₂Br), 1,1,1-triiodoethane (CH₃CI₃), and 1-bromo-2-iodo-tetrafluoroethane (CF₂BrCF₂I).

One of these disproportionation-inhibiting haloalkanes may be used alone, or two or more thereof may be used in any suitable combination. Among the disproportionation-inhibiting haloalkanes, at least one selected from the group consisting of diiodomethane (CH₂I₂), difluorodiiodomethane (CF₂I₂), trifluoroiodomethane (CF₃I), difluoroiodomethane (CHF₂I), 1-bromo-2-iodo-tetrafluoroethane (CF₂BrCF₂I), and 1,1,1-trifluoro-2-iodoethane (CF₃CH₂I) is particularly preferred in terms of factors such as availability, ODP value, and handleability.

As stated above, the disproportionation-inhibiting fluoroalkane used as a disproportionation inhibitor in the present disclosure may be a fluoroalkane with one to three carbon atoms and a boiling point of 0°C or lower. Any fluoroalkane with one to three carbon atoms can be said to be an alkane which has one to three carbon atoms and at least one of whose hydrogen atoms is substituted by fluorine.

Specific examples of such a disproportionation-inhibiting fluoroalkane include: fluoromethanes such as fluoromethane (boiling point = -78.2°C), difluoromethane (boiling point = -51.6°C), trifluoromethane (boiling point = -84.4°C), and tetrafluoromethane (boiling point = -127.8°C); fluoroethanes such as fluoroethane (boiling point = -37.1°C), 1,1-difluoroethane (boiling point = -24.7°C), 1,1,1-trifluoroethane (boiling point = -47.2°C), 1,1,1,2-tetrafluoroethane (boiling point = -26.3°C), and 1,1,1,2,2-pentafluoroethane (boiling point = -48.5°C); and fluoropropanes such as 1-fluoropropane (boiling point = -2.5°C), 2-fluoropropane (boiling point = -10.0°C), 2,2-difluoropropane (boiling point = -1.0°C), 1,1,1-trifluoropropane (boiling point = -12.0°C), 1,1,2,2-tetrafluoropropane (boiling point = -0.8°C), and 1,1,1,3,3,3-hexafluoropropane (boiling point = -1.4°C). One of these fluoroalkanes may be used alone as a disproportionation inhibitor, or a combination of two or more thereof may be used as a disproportionation inhibitor.

Among the fluoroalkanes as mentioned above, particularly typical compounds are fluoropropanes. The fluoropropane that can be used as the disproportionation-inhibiting fluoroalkane in the present disclosure may be any alkane which has three carbon atoms (namely, propane), one or more of whose hydrogen atoms are substituted by fluorine atoms, and which has a boiling point of 0°C or lower. Although 1-fluoropropane and 2-fluoropropane (compounds derived from substitution of one hydrogen atom of propane by fluorine) are mentioned above as specific examples, it should be appreciated that the fluoropropane used as the disproportionation-inhibiting fluoroalkane in the present disclosure is not limited to 1-fluoropropane or 2-fluoropropane.

In the present disclosure, any disproportionation-inhibiting fluoroalkane is used as a component of the second working medium together with a fluoroolefin serving as a main refrigerant component of the second working medium. Due to being a refrigeration cycle working medium, the second working medium basically needs to be gaseous in a normal temperature range. For this reason, the disproportionation-inhibiting fluoroalkane used has to have a boiling point of 0°C or lower.

For example, fluoroalkanes such as 1,2-difluoroethane (boiling point = 31°C), 1,1,2-trifluoroethane (boiling point = 5°C), 1,3-difluoropropane (boiling point = 40 to 42°C), 1,1,1,3,3-pentafluoropropane (boiling point = 15.3°C), and 1,1,2,2,3-pentafluoropropane (boiling point = 25 to 26°C) all have a boiling point above 0°C; thus, these fluoroalkanes cannot be used as disproportionation-inhibiting fluoroalkanes in the present disclosure.

In the present disclosure, as stated above, the second working medium is a refrigerant containing at least a fluoroolefin (fluoroalkene). If necessary, the second working medium may contain an additional refrigerant component such as an HFC and may further contain a disproportionation inhibitor. In the second working medium, the amount (percentage) of the fluoroolefin, the amount (percentage) of the additional refrigerant component, and the amount (percentage) of the disproportionation inhibitor are not limited to particular values. Amounts (ranges) as known in the art may be employed, or different amounts known in the art may be combined as appropriate.

In the refrigeration apparatus R1 according to the present disclosure, as described above, the first working medium contains a flammable refrigerant as a main refrigerant component, and the second working medium contains a fluoroolefin as a main refrigerant component. Thus, the first working medium composed mainly of the flammable refrigerant circulates in the first refrigeration cycle including the compressor 14, while the second working medium composed mainly of the fluoroolefin circulates in the second refrigeration cycle which does not include any compressor 14. As such, disproportionation of the fluoroolefin can be substantially prevented. In addition, the flammable refrigerant circulates mainly in the outdoor unit 10, and the relay unit 30 is located between the indoor unit 20 and the outdoor unit 10. This effectively reduces the possibility that the use of the flammable refrigerant has various impacts on indoor regions.

Both the first and second working media may contain additives or other components known in the field of refrigeration apparatuses or refrigeration cycles (or the field of refrigeration cycle working media). For example, as stated above, the first working medium, which is compressed by the compressor 14 in the first refrigeration cycle, may contain a refrigerating machine oil retained in the compressor 14.

In the refrigeration apparatus R1 according to Embodiment 1, as stated above, the first refrigeration cycle is included in the outdoor unit 10, at least the indoor heat exchanger 22 and the second piping 21 of the second refrigeration cycle are included in the indoor unit 20, and at least the relay heat exchanger 32 and the refrigerant pump 34 are included in the relay unit 30. At least a flammable refrigerant is used as a refrigerant component of the first working medium, and at least a fluoroolefin is used as a refrigerant component of the second working medium.

In such a refrigeration apparatus R1, there is no need to use any fluoroolefin in the first working medium circulating in the first refrigeration cycle including the compressor 14. Fluoroolefins are likely to undergo disproportionation under high-temperature and high-pressure conditions such as those in the compressor 14. The non-use of any fluoroolefin as a refrigerant component of the first working medium eliminates the need to take measures against disproportionation in the first refrigeration cycle.

The second working medium containing a fluoroolefin as a main component circulates in the second refrigeration cycle which does not include any compressor 14. The refrigerant pump 34 included in the second refrigeration cycle does not produce high-temperature and high-pressure conditions when pumping the second working medium, and can thus be expected to have substantially no risk of causing disproportionation of the fluoroolefin. As such, the second refrigeration cycle need not be prepared against disproportionation either.

Consequently, despite the use of a flammable refrigerant or a fluoroolefin as a refrigerant component, each of the refrigeration cycles can operate well, and already-existing refrigerant piping can be used in the indoor-side refrigeration cycle.

Furthermore, in the present disclosure, a fluoroolefin is used as a main refrigerant component in the second refrigeration cycle located on the indoor side. The fluoroolefin can achieve high thermal efficiency comparable to that achieved by R-32 which is a conventionally-used HFC refrigerant and has a lower GWP than R-32.

Generally, in the case of a refrigeration apparatus including an outdoor unit and an indoor unit, it is conceivable that a flammable refrigerant is used in an outdoor-side refrigeration cycle and carbon dioxide or water is used in an indoor-side refrigeration cycle. The reason is that carbon dioxide or water exerts little impact in the event of its leakage into indoor spaces. However, carbon dioxide has a high pressure for a refrigerant, and water has low heat transport capacity per unit flow rate and needs to be circulated at a high flow rate; thus, the use of carbon dioxide or water is incompatible with the use of already-existing refrigerant piping. Thus, in the indoor-side refrigeration cycle, it has been necessary to use an HFC refrigerant such as R-32 which has a relatively high GWP.

In the present disclosure, a fluoroolefin, which exhibits the same level of thermal efficiency as HFC refrigerants such as R-32, is used as a refrigerant (second working medium) in the second refrigeration cycle located on the indoor side. Although fluoroolefins are known to have the problem of disproportionation, disproportionation of the fluoroolefin in the second refrigeration cycle can be substantially prevented because the refrigerant pump 34 used for delivery of the second working medium in the second refrigeration cycle does not bring the second working medium into a high-temperature and high-pressure state.

Some fluoroolefins are compounds that rarely (or never) undergo disproportionation; however, such compounds tend to be less useful as refrigerant components than other fluoroolefins. In the present disclosure, for example, 1,1,2-trifluoroethylene (HFO-1123) is employed as a typical fluoroolefin. HFO-1123 has high refrigerant performance but is prone to disproportionation.

In the present disclosure, disproportionation is not likely to occur since the refrigerant pump 34 is used to circulate the second working medium in the second refrigeration cycle. Nevertheless, as stated above, the second working medium may further contain a component (disproportionation inhibitor) that inhibits disproportionation. The addition of such a component can significantly reduce the possibility that disproportionation of the fluoroolefin occurs due to unknown factors or for unexpected reasons, even when the fluoroolefin is HFO-1123 or the like which is prone to disproportionation.

### (Embodiment 2)

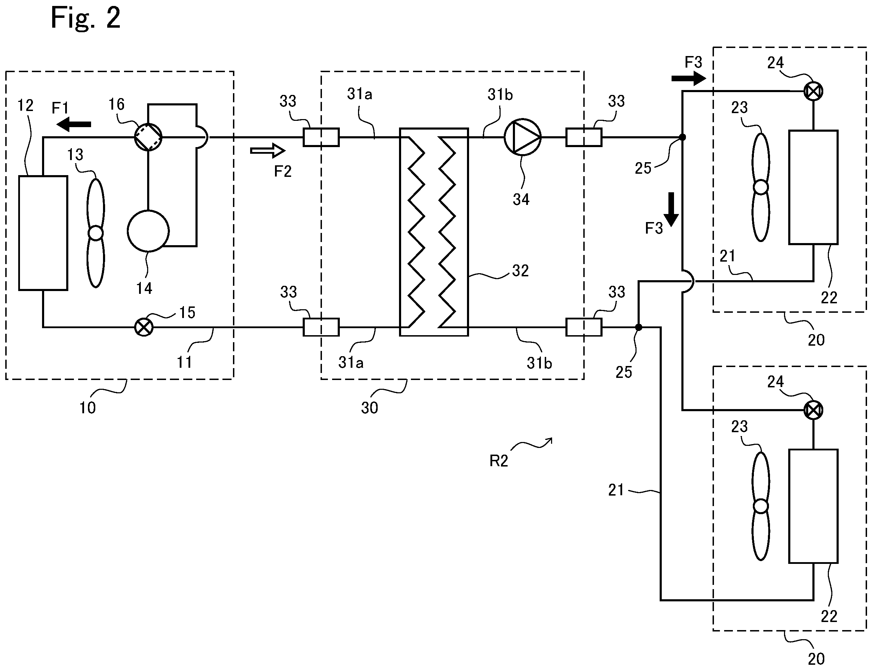

A refrigeration apparatus R2 shown in FIG 2 is a typical example of a configuration according to Embodiment 2. As shown in FIG 2, the refrigeration apparatus R2 according to Embodiment 2 includes an outdoor unit 10, an indoor unit 20, and a relay unit 30 like the refrigeration apparatus R1 according to Embodiment 1 described above. In the refrigeration apparatus R2, as in the refrigeration apparatus R1 according to Embodiment 1 described above, a first refrigeration cycle is included in the outdoor unit 10, a second refrigeration cycle is included in part in the indoor unit 20 and in part in the relay unit 30, and the first and second refrigeration cycles are thermally connected by a relay heat exchanger 32.

The refrigeration apparatus R2 according to Embodiment 2 includes a plurality of indoor units 20. Although FIG 2 depicts two indoor units 20, the refrigeration apparatus R2 according to Embodiment 2 may include three or more indoor units 20. All of the indoor units 20 have basically the same configuration, and each indoor unit 20 includes second piping 21, an indoor heat exchanger 22, an indoor blower 23, a refrigerant flow regulating valve 24, etc.

In the refrigeration apparatus R2 according to Embodiment 2, the relay heat exchanger 32 included in the relay unit 30 is connected to the second piping 21 of each of the plurality of indoor units 20 via branch portions 25. In the refrigeration apparatus R2 shown in FIG 2, the second relay piping 31b of the relay unit 30 is connected to the plurality of (two) indoor units 20 via piping connection portions 33. This connection is similar to that in the refrigeration apparatus R1 according to Embodiment 1 described above, but the difference is that there are the branch portions 25 between the piping connection portions 33 and the second piping 21.

Although in the example of FIG 2 the branch portions 25 are located between the piping connection portions 33 and the second piping 21 of each of the indoor units 20, the branch portions 25 may be located between the second relay piping 31b of the relay unit 30 and the piping connection portions 33. In FIG 2, where the number of the indoor units 20 is two, each branch portion 25 provides two branches each of which extends from a corresponding one of the piping connection portions 33 toward the second piping 21 of a corresponding one of the indoor units 20. In the case where the number of the indoor units 20 is three or more, each branch portion 25 provides three branches each of which extends toward the second piping 21 of a corresponding one of the indoor units 20. The branch portions 25 are not limited to a particular configuration. Any known configuration can be suitably employed such as that using branched pipes or branched couplings commonly known in the field of refrigerant piping.

In the refrigeration apparatus R2 according to Embodiment 2, as described above, the first refrigeration cycle located on the heat source side is included in the single outdoor unit 10 and the relay unit 30 is also a single unit, while the second refrigeration cycle located on the space cooling/heating side is divided into a plurality of indoor units 20 via the relay heat exchanger 32 included in the relay unit 30. Thus, a plurality of indoor spaces can be cooled or heated using one heat source circuit.

### (Embodiment 3)

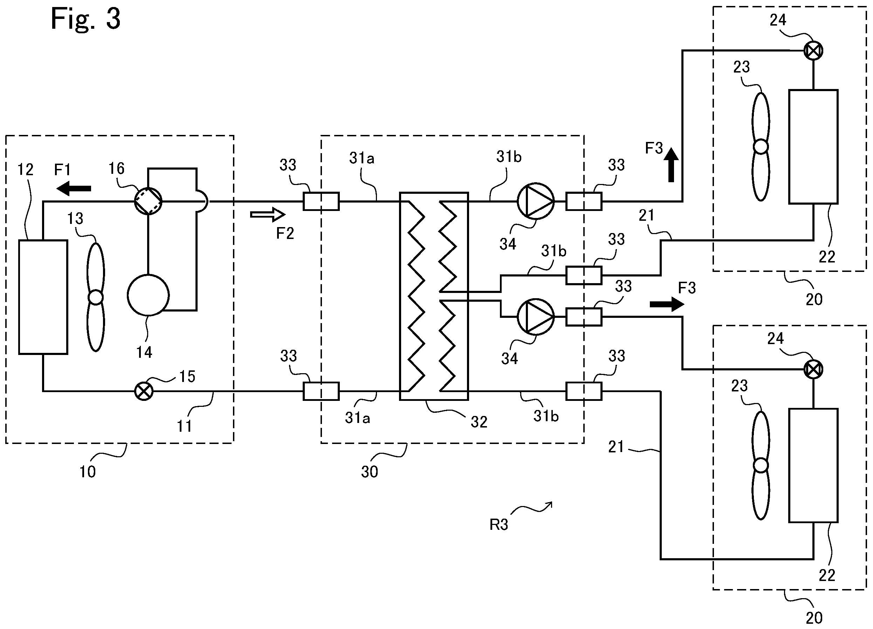

A refrigeration apparatus R3 shown in FIG 3 is a typical example of a configuration according to Embodiment 3. As shown in FIG 3, the refrigeration apparatus R3 according to Embodiment 3 includes one outdoor unit 10, one relay unit 30, and a plurality of indoor units 20 (two indoor units 20 in FIG 3) like the refrigeration apparatus R2 according to Embodiment 2 described above.

In the refrigeration apparatus R3, as in the refrigeration apparatus R1 or R2 according to Embodiment 1 or 2 described above, a first refrigeration cycle is included in the outdoor unit 10, a second refrigeration cycle is included in part in the indoor unit 20 and in part in the relay unit 30, and the first and second refrigeration cycles are thermally connected by a relay heat exchanger 32.

The refrigeration apparatus R3 according to Embodiment 3 differs from the refrigeration apparatus R2 according to Embodiment 2 in that there are no branch portions 25 between the relay heat exchanger 32 and the second piping 21 and that the relay heat exchanger 32 is located between one first refrigeration cycle and a plurality of second refrigeration cycles. In the refrigeration apparatus R3 shown in FIG 3, where the number of the indoor units 20 is two, there are two second refrigeration cycles, and the relay heat exchanger 32 includes: a first working medium flow region through which the first working medium flows and which is connected to the single first refrigeration cycle; and two second working medium flow regions through which the second working medium flows and each of which is connected to a corresponding one of the two second refrigeration cycles, the two second working medium flow regions being opposed to the first working medium flow region and arranged in parallel to each other. The same goes for the case where there are three or more second refrigeration cycles.

In the refrigeration apparatus R3 configured as described above, the first refrigeration cycle located on the heat source side is included in the single outdoor unit 10 and the relay unit 30 is also a single unit, while on the space cooling/heating side there are the plurality of second refrigeration cycles, each of which is included in part in a corresponding one of the plurality of indoor units 20. Thus, like the refrigeration apparatus R2 according to Embodiment 2 described above, the refrigeration apparatus R3 can cool or heat a plurality of indoor spaces using one heat source circuit.

In the case where a refrigeration apparatus R includes a plurality of indoor units 20, whether to employ the configuration of Embodiment 2 which includes the branch portions 25 or the configuration of Embodiment 3 which includes the relay heat exchanger 32 that can effect heat exchange between one first refrigeration cycle and a plurality of second refrigeration cycles can be chosen as appropriate depending on the conditions under which the refrigeration apparatus R is installed (the state of a building, rooms, or the like for which the refrigeration apparatus R is installed). For example, in the case where the refrigeration apparatus R includes three or more indoor units 20, the configuration disclosed in Embodiment 2 and the configuration disclosed in Embodiment 3 may be combined.

In the refrigeration apparatus R2 according to Embodiment 2 described above and the refrigeration apparatus R3 according to Embodiment 3, the plurality of indoor units 20 have the same configuration. Alternatively, the indoor units 20 may have different configurations depending on, for example, the conditions of rooms in which the indoor units 20 are installed. FIG 2 or 3 only shows basic components such as the second piping 21, the indoor heat exchanger 22, the indoor blower 23, and the refrigerant flow regulating valve 24 for each indoor unit 20. When the indoor units 20 are used in practice, components other than the basic components of each indoor unit 20 may be customized depending on the conditions under which the indoor unit 20 is installed.

### (Embodiment 4)

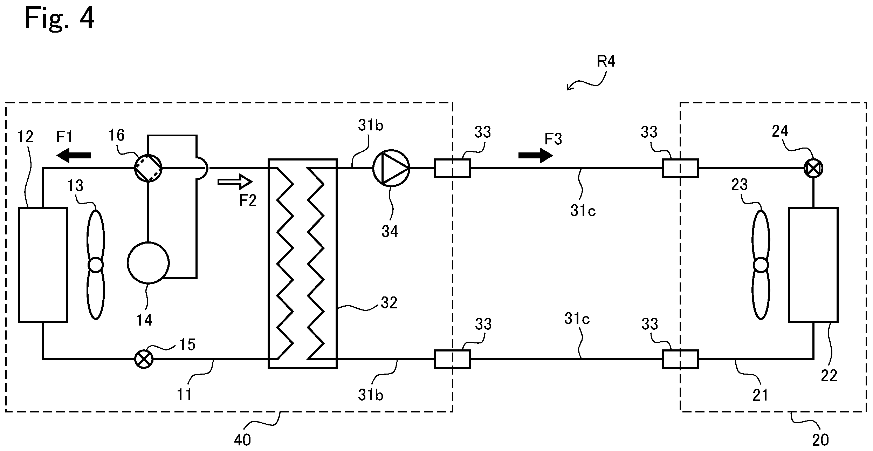

A refrigeration apparatus R4 shown in FIG 4 is a typical example of a configuration according to Embodiment 4. As shown in FIG 4, the refrigeration apparatus R4 according to Embodiment 4 includes an integral outdoor unit 40 and an indoor unit 20.

In the integral outdoor unit 40, the outdoor unit 10 and the relay unit 30 of the refrigeration apparatus R1 according to Embodiment 1 described above are integrated together. The integral outdoor unit 40 is located outdoors. Specifically, as shown by a dashed line in FIG 4, the integral outdoor unit 40 includes first piping 11, an outdoor heat exchanger 12, an outdoor blower 13, a compressor 14, an expansion valve 15, a four-way valve 16, second relay piping 31b, a relay heat exchanger 32, piping connection portions 33, a refrigerant pump 34, etc.

In the integral outdoor unit 40, the compressor 14, the relay heat exchanger 32, the expansion valve 15, and the outdoor heat exchanger 12 are arranged in this order and serially connected in a loop by the first piping 11, with the four-way valve 16 between the compressor 14 and the relay heat exchanger 32 or the outdoor heat exchanger 12. The connected components and the connecting piping constitute a first refrigeration cycle. That is, the integral outdoor unit 40 is configured in almost the same manner as the combination of the outdoor unit 10 and the relay unit 30 in the refrigeration apparatus R1 according to Embodiment 1 described above, except that the integral outdoor unit 40 does not include first relay piping 31a and piping connection portions 33 connecting the first relay piping 31a to the first piping 11.

The configurations of the indoor unit 20 and the second refrigeration cycle in the refrigeration apparatus R4 according to Embodiment 4 are substantially identical to those in the refrigeration apparatus R1 according to Embodiment 1 described above. The difference is that the integral outdoor unit 40 and the indoor unit 20 are connected by connection piping 31c via piping connection portions 33. The connection piping 31c has the same configuration as the first piping 11, the second piping 21, and the second relay piping 31b.

That is, in the refrigeration apparatus R4 according to Embodiment 4, the indoor unit 20 includes the second piping 21, the indoor heat exchanger 22, the indoor blower 23, the refrigerant flow regulating valve 24, etc., and the refrigerant pump 34 (integral outdoor unit 40), two of the piping connection portions 33, the indoor heat exchanger 22 (indoor unit 20), the other two of the piping connection portions 33, and the relay heat exchanger 32 (integral outdoor unit 40) are arranged in this order and serially connected in a loop by the second piping 21 (indoor unit 20), the connection piping 31c, and the second relay piping 31b to constitute the second refrigeration cycle.

In the case of such a refrigeration apparatus R4, the first refrigeration cycle which uses a flammable refrigerant can be included in the single integral outdoor unit 40 located outdoors. This permits the integral outdoor unit 40 (first refrigeration cycle) to be charged with the first working medium beforehand. Consequently, it becomes unnecessary to perform the process of charging the first refrigeration cycle with the first working medium (refrigerant) at the site where the refrigeration apparatus R4 is installed, and the risk of leakage of the flammable refrigerant can be further reduced.

In the refrigeration apparatus R1 according to Embodiment 1 described above, the outdoor unit 10 and the relay unit 30 are independent of each other. Thus, unlike the refrigeration apparatus R4, the refrigeration apparatus R1 cannot provide the advantage of eliminating the need for on-site refrigerant charging process. However, the refrigeration apparatus R1 is advantageous in that the outdoor unit 10 and the relay unit 30 can be individually placed at suitable locations and therefore that there is a lot of flexibility in installing the refrigeration apparatus R1.

In the illustrated example, the refrigeration apparatus R4 according to Embodiment 4 includes only one indoor unit 20. Alternatively, the refrigeration apparatus R4 may include a plurality of indoor units 20 like the refrigeration apparatus R2 or R3 according to Embodiment 2 or 3 described above. In this case, the refrigeration apparatus R4 may employ a configuration including branch portions 25 like the refrigeration apparatus R2 according to Embodiment 2 described above. Alternatively, like the refrigeration apparatus R3 according to Embodiment 3 described above, the refrigeration apparatus R4 may employ a configuration including a relay heat exchanger 32 that can effect heat exchange between one first refrigeration cycle and a plurality of second refrigeration cycles.

### (Embodiment 5)

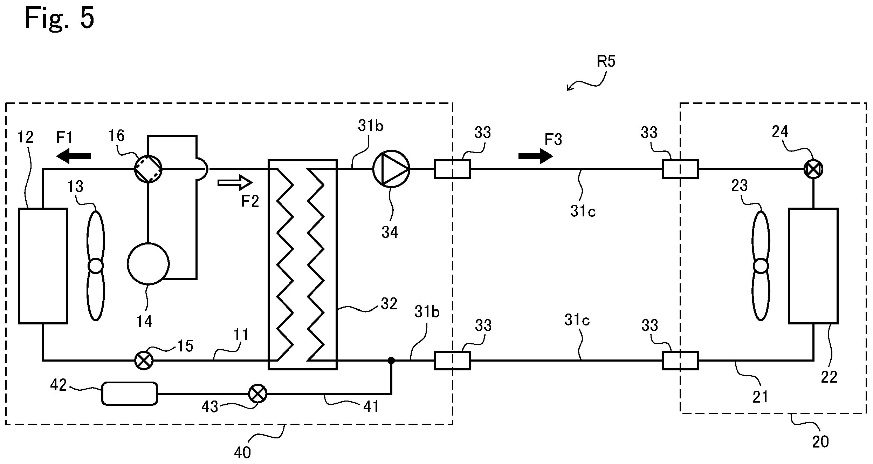

A refrigeration apparatus R5 shown in FIG 5 is a typical example of a configuration according to Embodiment 5. As shown in FIG 5, the refrigeration apparatus R5 according to Embodiment 5 includes an integral outdoor unit 40 and one indoor unit 20 like the refrigeration apparatus R4 according to Embodiment 4 described above. The difference is that, as shown in FIG 5, the integral outdoor unit 40 of the refrigeration apparatus R5 according to Embodiment 5 includes a refrigerant tank 42 charged with the first working medium and connected to the second refrigeration cycle.

In the example of FIG 5, third piping 41 branches from second relay piping 31b of the integral outdoor unit 40 (that region of the second relay piping 31b in which a refrigerant pump 34 is not located) to connect the refrigerant tank 42 to the second relay piping 31b. A solenoid valve 43 is located between the third piping 41 and the refrigerant tank 42. The point at which the third piping 41 is connected to the second relay piping 31b lies between a relay heat exchanger 32 (integral outdoor unit 40) and an indoor heat exchanger 22 (indoor unit 20) in the second refrigeration cycle.

More specifically, in the refrigeration apparatus R5, the refrigerant pump 34 (integral outdoor unit 40), two piping connection portions 33, a refrigerant flow regulating valve 24, the indoor heat exchanger 22 (indoor unit 20), two other piping connection portions 33, and the relay heat exchanger 32 (integral outdoor unit 40) are connected in this order by refrigerant piping to constitute the second refrigeration cycle.

In the second refrigeration cycle, the refrigerant pump 34 and the refrigerant flow regulating valve 24 are connected by connection piping 31c via two of the piping connection portions 33, the refrigerant flow regulating valve 24 and the indoor heat exchanger 22 are connected by the second piping 21, the indoor heat exchanger 22 and the relay heat exchanger 32 are connected by the connection piping 31c via the other two of the piping connection portions 33, and the relay heat exchanger 32 and the refrigerant pump 34 are connected by the second relay piping 31b. In the integral outdoor unit 40, the third piping 41 is connected to that region of the second relay piping 31b to which the refrigerant pump 34 is not connected.

In the case of such a refrigeration apparatus R5, where the integral outdoor unit 40 includes the refrigerant tank 42, the refrigerant tank 42 is charged with the second working medium beforehand. Thus, the refrigeration apparatus R5 can be made ready for use simply by connecting refrigerant piping (the second relay piping 31b in FIG 5) of the integral outdoor unit 40 to the second refrigeration cycle (to the second piping 21 of the indoor unit 20 via the connection piping 31c in FIG 5) and drawing a vacuum.

That is, since the refrigeration apparatus R5 has basically the same configuration as the refrigeration apparatus R4 according to Embodiment 4 described above, the integral outdoor unit 40 (first refrigeration cycle) can be charged with the first working medium beforehand. As stated above, this makes it unnecessary to perform the process of charging the first refrigeration cycle with the first working medium at the site where the refrigeration apparatus R5 is installed.

Furthermore, the integral outdoor unit 40 of the refrigeration apparatus R5 includes the refrigerant tank 42 connectable to the second refrigeration cycle. In installation of the refrigeration apparatus R5, the integral outdoor unit 40 placed in position is connected to the second piping 21 of the indoor unit 20 via the connection piping 3 1c, and a vacuum is drawn through the second piping 21. After that, the solenoid valve 43 is opened to supply the second working medium from the refrigerant tank 42 to the second refrigeration cycle. Thus, the process of charging the second refrigeration cycle with the second working medium at the site of installation of the refrigeration apparatus R5 can be simplified. Consequently, the man-hour needed to put the refrigeration apparatus R5 into practical use can be reduced.

In the illustrated example, the refrigeration apparatus R5 according to Embodiment 5 includes only one indoor unit 20. Alternatively, the refrigeration apparatus R5 may include a plurality of indoor units 20 like the refrigeration apparatus R2 or R3 according to Embodiment 2 or 3 described above. In this case, the refrigeration apparatus R5 may employ a configuration including branch portions 25 like the refrigeration apparatus according to Embodiment 2 described above. Alternatively, like the refrigeration apparatus R3 according to Embodiment 3 described above, the refrigeration apparatus R5 may employ a configuration including a relay heat exchanger 32 that can effect heat exchange between one first refrigeration cycle and a plurality of second refrigeration cycles.

### (Additional statements)

The present specification discloses the following technologies based on the embodiments described above.

(Technology 1) A refrigeration apparatus according to the present disclosure includes: a first refrigeration cycle including an outdoor heat exchanger, a compressor, an expansion mechanism, and first piping by which the outdoor heat exchanger, the compressor, and the expansion mechanism are connected to allow a first working medium to circulate through the outdoor heat exchanger, the compressor, and the expansion mechanism; a second refrigeration cycle including an indoor heat exchanger, a refrigerant pump, and second piping by which the indoor heat exchanger and the refrigerant pump are connected to allow a second working medium to circulate through the indoor heat exchanger and the refrigerant pump; and a relay heat exchanger located between the first refrigeration cycle and the second refrigeration cycle to effect heat exchange between the first refrigeration cycle and the second refrigeration cycle, wherein the refrigeration apparatus includes an outdoor unit located outdoors and including the first refrigeration cycle, an indoor unit located indoors and including at least the indoor heat exchanger and the second piping of the second refrigeration cycle, and a relay unit independent of the outdoor unit and the indoor unit and including at least the relay heat exchanger and the refrigerant pump, at least a flammable refrigerant is used as a refrigerant component of the first working medium, and at least a fluoroolefin is used as a refrigerant component of the second working medium.

(Technology 2) The refrigeration apparatus according to technology 1, wherein the flammable refrigerant is a saturated hydrocarbon, and the relay unit is located outdoors.

(Technology 3) The refrigeration apparatus according to technology 1 or 2, including a plurality of the indoor units, wherein the relay heat exchanger included in the relay unit is connected to the second piping of each of the plurality of indoor units via a branch portion.

(Technology 4) The refrigeration apparatus according to any one of technologies 1 to 3, including a plurality of the indoor units, wherein the relay heat exchanger is located between the first refrigeration cycle and a plurality of the second refrigeration cycles.

(Technology 5) The refrigeration apparatus according to any one of technologies 1 to 4, wherein the outdoor unit and the relay unit are integrated and located outdoors.

(Technology 6) The refrigeration apparatus according to technology 5, wherein the outdoor unit includes a refrigerant tank charged with the first working medium, and the refrigerant tank is connected to the second refrigeration cycle.

(Technology 7) The refrigeration apparatus according to any one of technologies 1 to 7, wherein the refrigerant pump includes a motor located to avoid contact with the second working medium.

The present invention is not limited to the embodiments described above, and various modifications can be made insofar as the modifications come within the scope as defined by the appended claims. The technical scope of the present invention encompasses embodiments obtained by combining technical features disclosed in different embodiments or variants.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present invention can be applied widely and suitably in the field of refrigeration apparatuses, in particular the field of refrigeration apparatuses including a refrigeration cycle that includes a compressor and uses a working medium containing a flammable refrigerant or a fluoroolefin.

### Reference Signs List

- 10:: outdoor unit
- 11:: first piping
- 12:: outdoor heat exchanger
- 13:: outdoor blower
- 14:: compressor
- 15:: expansion valve(expansion mechanism)
- 16:: four-way valve
- 20:: indoor unit
- 21:: second piping
- 22:: indoor heat exchanger
- 23:: indoor blower
- 24:: refrigerant flow regulating valve
- 25:: branch portion
- 30:: relay unit
- 31a:: first relay piping
- 31b :: second relay piping
- 31c:: connection piping
- 32:: relay heat exchanger
- 33:: piping connection portion
- 34:: refrigerant pump
- 40:: integral outdoor unit
- 41:: third piping
- 42:: refrigerant tank
- 43:: solenoid valve

## Claims

1. A refrigeration apparatus comprising:
a first refrigeration cycle including an outdoor heat exchanger, a compressor, an expansion mechanism, and first piping by which the outdoor heat exchanger, the compressor, and the expansion mechanism are connected to allow a first working medium to circulate through the outdoor heat exchanger, the compressor, and the expansion mechanism;
a second refrigeration cycle including an indoor heat exchanger, a refrigerant pump, and second piping by which the indoor heat exchanger and the refrigerant pump are connected to allow a second working medium to circulate through the indoor heat exchanger and the refrigerant pump; and
a relay heat exchanger located between the first refrigeration cycle and the second refrigeration cycle to effect heat exchange between the first refrigeration cycle and the second refrigeration cycle, wherein
the refrigeration apparatus comprises
an outdoor unit located outdoors and including the first refrigeration cycle,
an indoor unit located indoors and including at least the indoor heat exchanger and the second piping of the second refrigeration cycle, and
a relay unit independent of the outdoor unit and the indoor unit and including at least the relay heat exchanger and the refrigerant pump,
at least a flammable refrigerant is used as a refrigerant component of the first working medium, and
at least a fluoroolefin is used as a refrigerant component of the second working medium.

2. The refrigeration apparatus according to claim 1, wherein
the flammable refrigerant is a saturated hydrocarbon, and
the relay unit is located outdoors.

3. The refrigeration apparatus according to claim 1 or 2, comprising a plurality of the indoor units, wherein
the relay heat exchanger included in the relay unit is connected to the second piping of each of the plurality of indoor units via a branch portion.

4. The refrigeration apparatus according to claim 1 or 2, comprising a plurality of the indoor units, wherein
the relay heat exchanger is located between the first refrigeration cycle and a plurality of the second refrigeration cycles.

5. The refrigeration apparatus according to claim 1 or 2, wherein
the outdoor unit and the relay unit are integrated and located outdoors.

6. The refrigeration apparatus according to claim 5, wherein
the outdoor unit includes a refrigerant tank charged with the first working medium, and
the refrigerant tank is connected to the second refrigeration cycle.

7. The refrigeration apparatus according to claim 1, wherein
the refrigerant pump includes a motor located to avoid contact with the second working medium.
